# EUROPÄISCHE PATENTSCHRIFT

(11) **EP 1 129 039 B1**
(45) Veröffentlichungstag und Bekanntmachung des Hinweises auf die Patenterteilung: **17.03.2004**
(21) Anmeldenummer: 00947993.2
(22) Anmeldetag: 25.07.2000
(51) Int. Cl.: C03B 9/193

(54) **VERFAHREN UND VORRICHTUNG ZUM PRESSEN EINES KÜLBELS**
METHOD AND DEVICE FOR PRESSING A GOB
PROCEDE ET DISPOSITIF POUR PRESSER UNE EBAUCHE

(30) Priorität: 30.07.1999 DE 19935866
(43) Veröffentlichungstag der Anmeldung: 05.09.2001
(73) Patentinhaber: Heye International GmbH, 31683 Obernkirchen (DE)
(72) Erfinder: SCHWARZER, Siegfried, D-31683 Stöckse (DE)
(74) Vertreter: Callies, Rainer
(86) Internationale Anmeldenummer: PCT/EP2000/007088
(87) Internationale Veröffentlichungsnummer: WO 2001/009049

(56) Entgegenhaltungen:
- US-A- 4 336 050
- US-A- 4 411 681
- US-A- 4 662 928

## Beschreibung

Die Erfindung betrifft ein Verfahren nach dem Oberbegriff des Anspruchs 1 und eine Vorrichtung nach dem Oberbegriff des Anspruchs 5.

Bei einer bekannten Vorrichtung dieser Art (US 4 336 050 A) befindet sich die Ladeöffnung oben in einer nicht längsgeteilten Blockform. Zwischen der Blockform und der Mündungsform ist ein längsgeteiltes Vorformmittelstück angeordnet. Die Mündungsform weist ein längsgeteiltes Mündungswerkzeug und einen in einer Radialnut des Mündungswerkzeugs gehaltenen, nicht längsgeteilten Führungsring für den Preßstempel auf. Die Arbeitsendstellung des Preßstempels ist dadurch definiert, daß eine obere Ringfläche eines Preßstempelhalters zur Anlage an einer ringförmigen Gegenfläche des Führungsrings kommt. Wegen des mit zunehmendem Verschleiß zunehmenden axialen Spiels zwischen dem Führungsring und dem geschlossenen Mündungswerkzeug ändert sich die Arbeitsendstellung in unerwünschter Weise. Offenbar wird der axial äußere Dichtungsrand der Mündung durch die gegenüberliegende radiale Stimfläche des Führungsrings geformt. Dies führt zu in die Formspalten gepreßten, unerwünschten, scharfkantigen Glasnähten am Übergang von dem sich radial erstreckenden axial äußeren Dichtungsrand in die sich anschließende radial innere und radial äußere Mündungskontur. Diese Glasnähte beeinträchtigen auch die Dichtwirkung zwischen der Mündung und ihrem Verschluß.

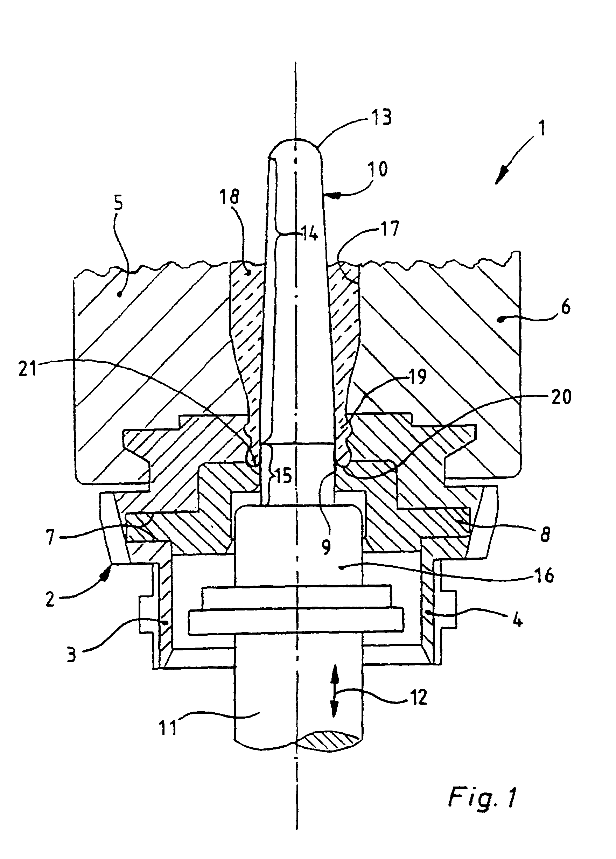

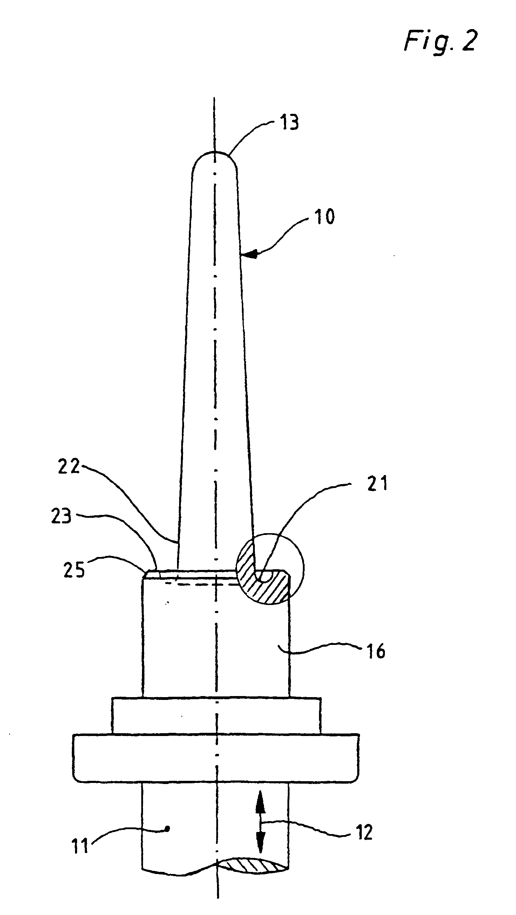

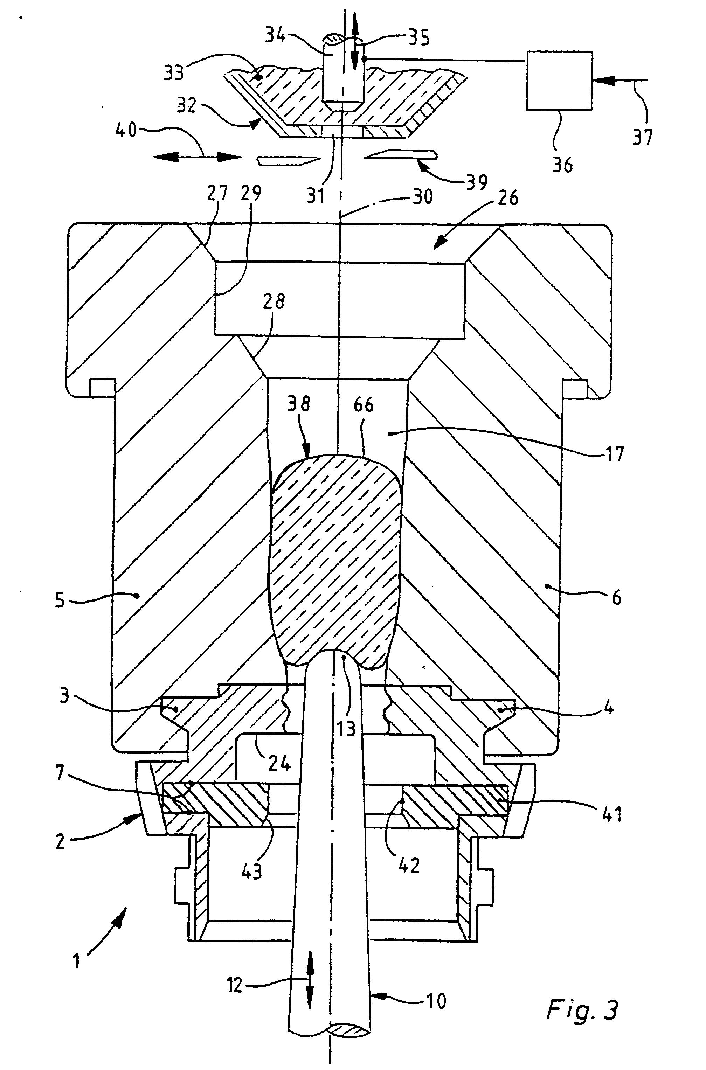

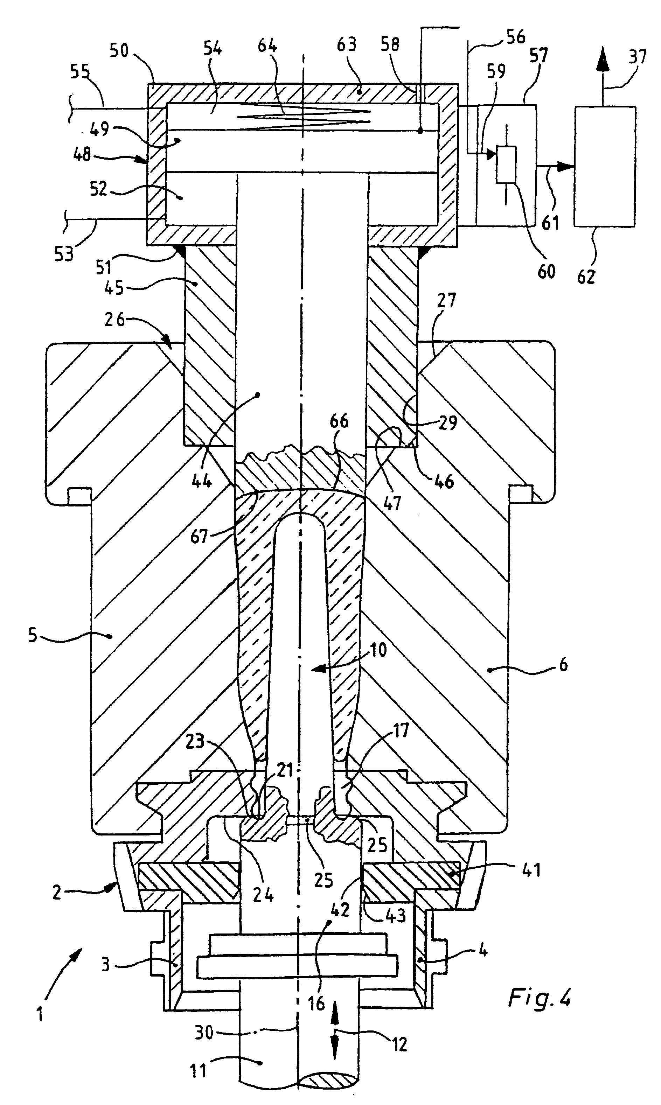

In den Fig. 1 und 2 der US 4 662 928 A ist zum Stand der Technik ein an sich bekanntes Vorformwerkzeug einer Blas-Blas-Maschine zur Herstellung von Sektflaschen offenbart. Es weist eine längsgeteilte Vorform und ein längsgeteiltes Mündungswerkzeug auf. Ein axial bewegbarer Pegel liegt in seiner axialen Arbeitsendstellung an dem geschlossenen Mündungswerkzeug an. Der Pegel formt einen kleinen, radial inneren Teil des axial äußeren Dichtungsrandes der Mündung der Sektflasche. Der Rest des Dichtungsrandes wird durch das Mündungswerkzeug geformt. Zwischen diesen beiden Dichtungsrandteilen ist eine ringförmige Glasnaht in die Teilfuge zwischen Pegel und Mündungswerkzeug gepreßt (Fig. 2 und 3A). Außerdem erstrecken sich gegenüberliegende senkrechte Glasnähte, die von der Teilungsebene des Mündungswerkzeugs herrühren, bis in den Dichtungsrand. Diese Glasnähte müssen in einem aufwendigen Arbeitsgang durch Feuerpolieren nachträglich entfemt werden (Fig. 3B). Zur Vermeidung dieser Nachteile schlägt die US 4 662 928 A vor, den gesamten Dichtungsrand durch einen in dem Mündungswerkzeug gehaltenen, ungeteilten Führungsring herstellen zu lassen (Fig. 4 bis 6). Dann ergeben sich aber ähnliche Nachteile wie bei der US 4 336 050 A.

Bei einer an sich bekannten Vorrichtung (Fig. 1 oder EP 0 327 240 A1 ) wird die Arbeitsendstellung des Preßstempels ausschließlich durch den Verformungswiderstand des schmelzflüssigen Glases bestimmt, wenn die Ausnehmung vollständig mit Glas gefüllt und das Külbel fertiggepreßt ist. So hängt die Arbeitsendstellung des Preßstempels ab von der jeweiligen Masse des Tropfens und/oder dem jeweiligen Volumen der Ausnehmung. Der Preßstempel weist an seinem Fuß einen leicht konischen, fast zylindrischen Führungsabschnitt auf. Die leichte Konizität soll das spätere Herausziehen des Preßstempels aus dem Külbel erleichtern. Auf einem letzten Teil des Weges des Preßstempels bis in seine Arbeitsendstellung taucht der Führungsabschnitt in einen nicht längsgeteilten Führungsring ein und wird dadurch in radialer Richtung zentriert und geführt. Wegen der leichten Konizität des Führungsabschnitts verbleibt zwischen dem Führungsabschnitt und dem Führungsring ein radialer Spalt, dessen Weite von der jeweiligen Arbeitsendstellung des Preßstempels abhängt. In diesen Spalt kann in bestimmten Betriebssituationen beim Pressen Glasmasse in unerwünschter Weise eindringen. Der Führungsring ist radial außen in einer Haltenut des Mündungswerkzeugs gehalten. Der Führungsring weist an seinem der Ausnehmung zugewandten Ende einen Formring zur Formung des axial äußeren Dichtungsrandes der Mündung des Külbels auf.

Aus der US 4 411 681 A ist es an sich bekannt, einen Stempel zunächst in seine Betriebsendstellung hochzufahren, in der ein Ring des Stempels an einem ungeteilten Führungsring einer Mündungsform anliegt (Fig. 1 bis 3). Sodann fällt ein Glasposten in eine Füllöffnung einer Formausnehmung einer längs- und quergeteilten Vorform und auf die Spitze des Stempels. Ein Blaskopf wird von oben in die Füllöffnung eingeführt (Fig. 2) und bläst den Glasposten fest in die Vorform und die Mündungsform und um den Stempel herum, wobei ein Abstand zwischen dem Blaskopf und dem Glas besteht (Fig. 3). Danach wird der Stempel bis in eine Mittelstellung abgesenkt (Fig. 4). Druckluft wird durch die Mündung eingeleitet und bläst das Külbel vor, bis es auch an dem Blaskopf anliegt. Schließlich wird das fertige Külbel aus der Vorform entformt (Fig. 5). Dieses kombinierte Fest- und Vorblasen des Külbels unter Mitwirkung des Stempels erfordert hohen baulichen Aufwand und eine vergleichsweise lange Zyklusdauer. Nachteilig ist ferner, dass ein Dichtungsrand der Mündung des Külbels durch den Führungsring geformt wird.

Aus der DE 32 32 288 C1 ist es an sich bekannt, den Posten in eine Blockformausnehmung einzubringen. Zuvor wird das Volumen der Blockformausnehmung um ein Zusatzvolumen vergrößert. Dies kann durch Abwärtsbewegung eines Kolbens in einer Bodenausnehmung der Blockform geschehen. Das Zusatzvolumen wird durch Aufwärtsbewegung des Kolbens bis zur Fertigstellung des Külbels wieder zu Null gemacht.

Aus der GB 2 178 421 A ist eine Vorrichtung zur Einstellung der Postenmasse an einem Speiser an sich bekannt.

Der Erfindung liegt die Aufgabe zugrunde, die Formung der Mündung des Külbels zu verbessern.

Diese Aufgabe ist hinsichtlich des Verfahrens durch die Merkmale des Anspruchs 1 gelöst. Dank seiner Anlage am Mündungswerkzeug erreicht der Preßstempel jetzt sehr präzise stets die gleiche Arbeitsendstellung unabhängig von der Masse des Postens und dem Volumen der Ausnehmung der Vorform. Dies führt zu gleichbleibenden Innenkonturen der Mündungen der Külbel. Weil darüber hinaus der gesamte axial äußere Dichtungsrand der Mündung nicht mehr durch den Führungsring, sondern durch den Preßstempel selbst geformt wird, kann der leicht konische Führungsabschnitt am Fuß des Preßstempels in günstiger Weise stärker konisch gestaltet werden. Dadurch wird das Herausziehen des Preßstempels aus dem fertig gepreßten Külbel erleichtert und eine Beschädigung der Mündungsinnenfläche des Külbels verhindert. Das Külbel wird in zwei Stufen gepreßt. In der ersten Stufe wird das Külbel durch den Preßstempel bis in seine Arbeitsendstellung vorgepreßt, und in der zweiten Stufe erfolgt das Fertigpressen des Külbels durch das Preßelement. Das Ergebnis ist ein Külbel mit ideal ausgepreßter, unbeschädigter Mündung und auch sonst sehr günstiger Glasverteilung. Die Erfindung eignet sich insbesondere zur Anwendung bei sogenannten I.S. (Individual Section)-Preß-Blas-Glasformmaschinen.

Die Merkmale des Anspruchs 2 halten das Preßelement vergleichsweise lange mit dem Glas in Berührung.

Die Ladeöffnung gemäß Anspruch 3 kann trichterartig ausgebildet sein, um die störungsfreie Einbringung des Postens in die Ausnehmung zu verbessern und zu erleichtern. So läßt sich ein gesonderter Ladetrichter in den meisten Fällen vermeiden. Ein solcher Ladetrichter wäre anderenfalls als gesondertes Element zum Laden über die Ladeöffnung zu bewegen und nach dem Laden wieder zu entfemen. Dies würde höheren baulichen und betrieblichen Aufwand bedeuten.

Im Betrieb lassen sich Schwankungen der Postenmasse nicht vermeiden. Mit den Merkmalen des Anspruchs 4 kann schnell und sicher auf die Einhaltung der gewünschten optimalen Postenmasse Einfluß genommen werden.

Die zuvor erwähnte Aufgabe ist hinsichtlich der Vorrichtung durch die Merkmale des Anspruchs 5 gelöst. Es ergeben sich im wesentlichen die gleichen Vorteile, wie sie im Zusammenhang mit Anspruch 1 erwähnt wurden.

Die Ladeöffnung gemäß Anspruch 6 kann vorzugsweise trichterförmig ausgebildet sein, um die Einbringung des Postens in die Ausnehmung zu erleichtern und zu verbessern.

Die Merkmale des Anspruchs 7 sind insbesondere bei der Herstellung von Weithalsgläsem von Vorteil. Die geschlossene Vorform läßt sich auf besonders einfache Weise zuhalten. Diese Zuhaltung ist erforderlich, um während des Preßvorgangs, wo die Preßkräfte die Einzelteile der Vorform öffnen wollen, ein solches Öffnen zu verhindern. Durch ein solches Öffnen würden Vorformspalten entstehen, in die in unerwünschter Weise Glasmasse gepreßt werden könnte. Zwischen der Blockform und dem Mündungswerkzeug kann auch entsprechend der DE 32 32 288 C1 ein längsgeteiltes Vorformmittelstück angeordnet sein. Auf diese Weise könnten unter Verwendung einer Blockform auch Enghalsgläser hergestellt werden.

Mit den Merkmalen des Anspruchs 8 wird der axial äußere Dichtungsrand der Mündung nicht mehr von einem Führungsring in dem Mündungswerkzeug oder von dem Mündungswerkzeug, sondem vollständig durch ein Element des Preßstempels geformt. Dies erhöht die Präzision der Mündungsformung.

Gemäß Anspruch 9 läßt sich die Arbeitsendstellung konstruktiv besonders einfach realisieren.

Durch die Merkmale des Anspruchs 10 ist der Preßstempel in dem für die Külbelformung besonders wichtigen letzten Wegabschnitt in radialer Richtung an einer zylindrischen Schaftfläche exakt radial geführt.

Gemäß Anspruch 11 ist der Zentrierring auch bei geöffnetem Mündungswerkzeug sicher in dem Mündungswerkzeug gehalten. Das Mündungswerkzeug wird im Betrieb erst zur Abgabe des in der Fertigformstation fertig geformten Hohlglasgegenstands geöffnet.

Diese und weitere Merkmale und Vorteile der Erfindung werden nachfolgend anhand der in den Fig. 2 bis 9 der Zeichnungen dargestellten Ausführungsbeispiele näher erläutert.

Es zeigt:
Fig. 1 einen Längsschnitt durch einen Teil einer geschlossenen Vorform nach dem Stand der Technik mit dem Preßstempel in seiner Arbeitsendstellung,
Fig. 2 eine teilweise geschnittene Seitenansicht eines Preßstempels nach der Erfindung,
Fig. 3 einen Längsschnitt durch eine geschlossene Vorform nach der Erfindung mit offener Ladeöffnung und dem Preßstempel in Ladestellung,
Fig. 4 einen Längsschnitt durch die Vorform gemäß Fig. 3 mit in die Ladeöffnung eingesetztem Preßelement und dem Preßstempel in seiner Arbeitsendstellung,

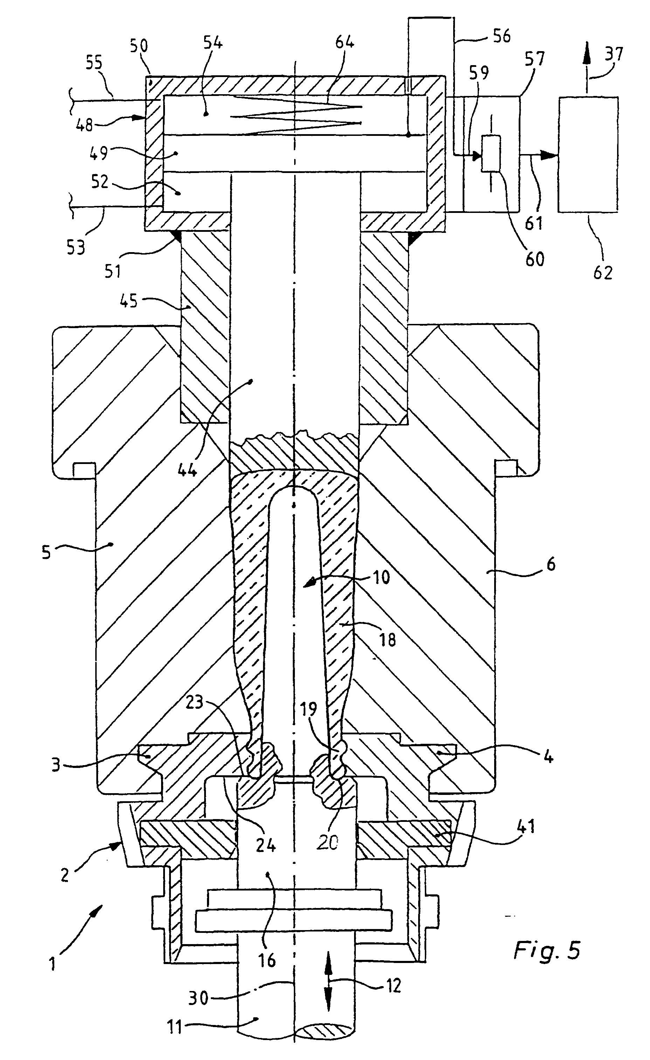

Fig. 5 einen Längsschnitt durch die Vorform gemäß Fig. 4 mit dem Preßelement in seiner Arbeitsendstellung,

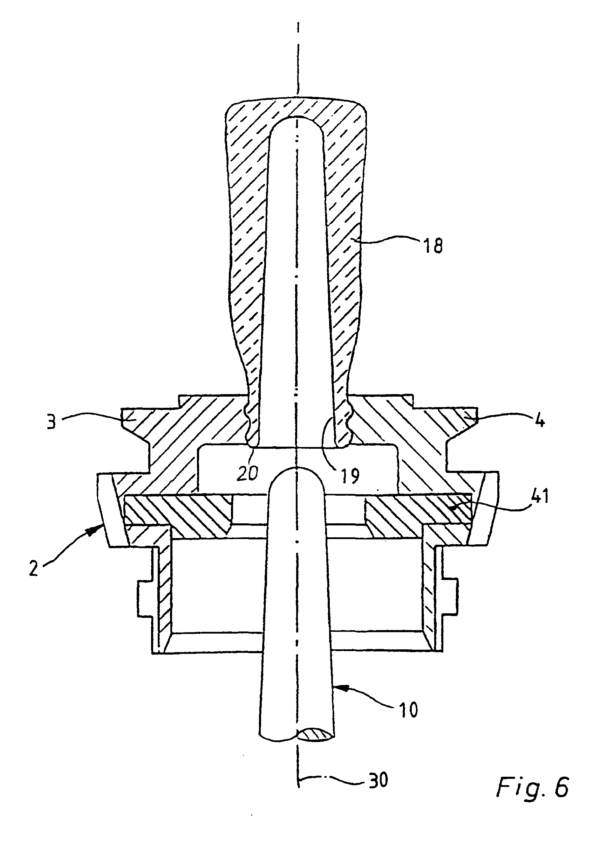

Fig. 6 einen Längsschnitt durch das geschlossene Mündungswerkzeug mit fertigem Külbel und dem Preßstempel in seiner tiefsten oder Übergabeendstellung,

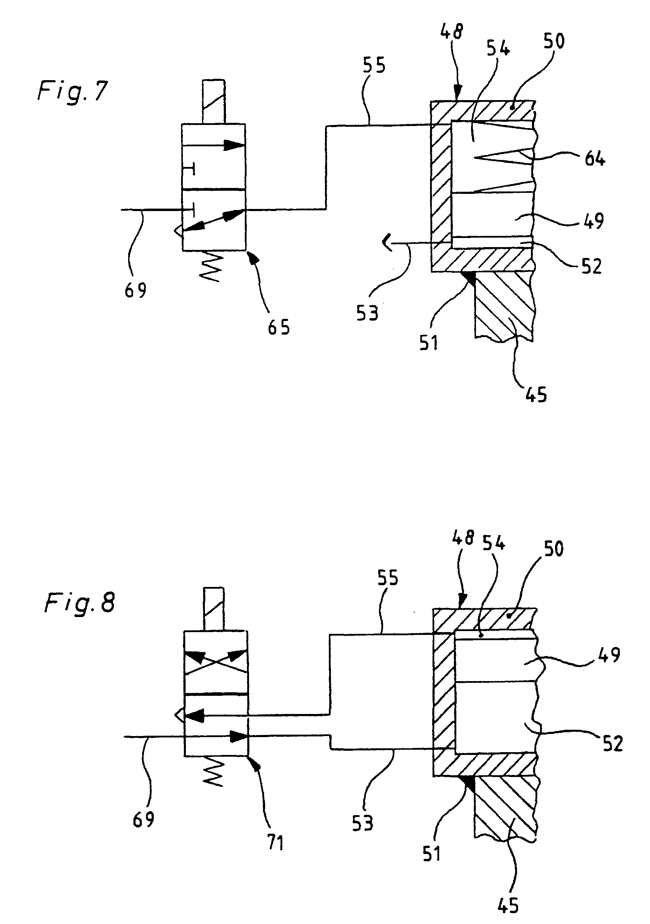

Fig. 7 und 8 Schaltbilder für unterschiedliche Betriebsarten des Preßelements und

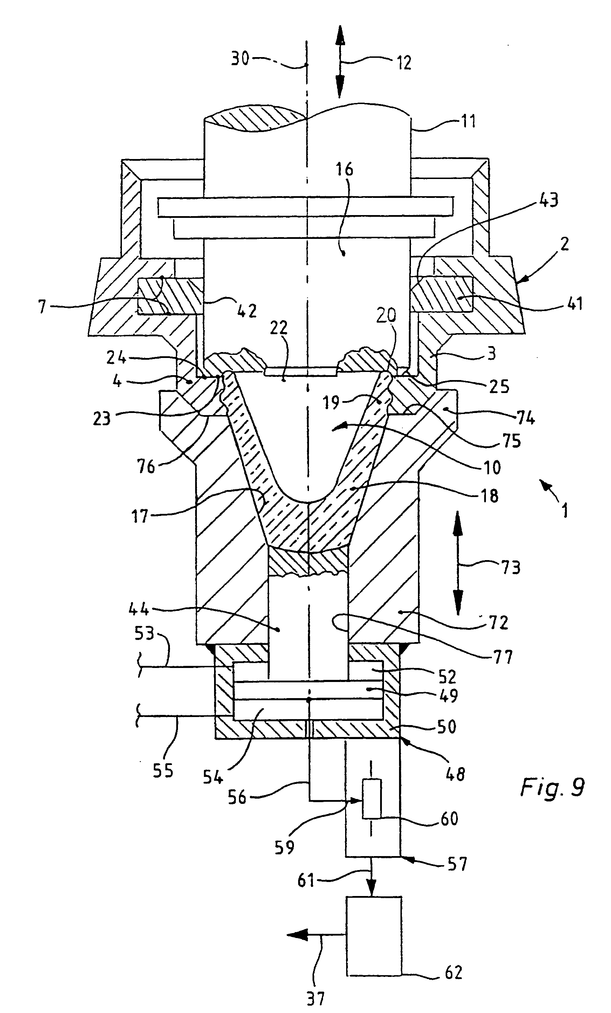

Fig. 9 einen Längsschnitt durch eine geschlossene Vorform mit Blockform sowie Preßstempel und Preßelement jeweils in ihrer Arbeitsendstellung.

In Fig. 1 ist der untere Teil einer geschlossenen Vorform 1 dargestellt. Die Vorform 1 weist ein längsgeteiltes Mündungswerkzeug 2 mit Mündungswerkzeughälften 3 und 4 sowie Vorformhälften 5 und 6 auf. In einer radialen Haltenut 7 des Mündungswerkzeugs 2 ist ein nicht längsgeteilter Führungsring 8 gehalten. Der Führungsring 8 weist einen mittigen Durchlaß 9 für einen Preßstempel 10 auf. Der Preßstempel ist auf einer Kolbenstange 11 einer nicht weiter gezeichneten, bekannten Kolben-Zylinder-Einheit montiert und in den Richtungen eines Doppelpfeils 12 heb- und senkbar. Der Preßstempel 10 weist eine Stempelspitze 13, einen ausgeprägt konischen Abschnitt 14 und einen einen Fuß des Preßstempels 10 bildenden, leicht konischen Abschnitt 15 auf. An den Fuß 15 schließt sich nach unten ein einen größeren Durchmesser aufweisender, zylindrischer Schaft 16 des Preßstempels 10 an.

In bekannter Weise sind die Vorformhälften 5, 6 oben mit einer Ladeöffnung versehen, die entsprechend Fig. 1 der EP 0 327 240 A1 nach dem Einbringen des Postens in eine Ausnehmung 17 der Vorform 1 für den Preßvorgang mit einem Vorformboden verschlossen werden kann.

In Fig. 1 ist der Preßstempel 10 in seiner obersten Arbeitsendstellung gezeichnet, die ohne weiteren mechanischen Anschlag allein durch den Verformungswiderstand des schmelzflüssigen Glases in der Ausnehmung 17 definiert ist. Je nach der Masse des in die Ausnehmung 17 eingebrachten Postens schmelzflüssigen Glases und je nach dem Verschleißzustand der Vorform 1 und des Preßstempels 10 ergibt sich in der Arbeitsendstellung des Preßstempels 10 eine größere oder kleinere Eindringtiefe des Preßstempels 10 in die Ausnehmung 17. Dies hat zur Folge, daß im Normalbetrieb sich ändernde axiale Zonen des leicht konischen Abschnitts 15 des Preßstempels 10 in der Arbeitsendstellung des Preßstempels 10 dem mittigen Durchlaß 9 des Führungsrings 8 gegenüberliegen. Dies führt zu Ringspalten unterschiedlicher Weite zwischen dem mittigen Durchlaß 9 und dem leicht konischen Abschnitt 15 und zu entsprechend größerer oder geringerer Gefahr, daß in diesen Ringspalt schmelzflüssiges Glas während des Preßvorgangs hineingepreßt wird.

In Fig. 1 ist in der Ausnehmung 17 ein fertig gepreßtes Külbel 18 eingezeichnet. Das Külbel weist unten eine Mündung 19 auf, deren axial äußerer Rand 20 durch eine oben in dem Führungsring 8 ausgebildeteringförmige Ausnehmung 21 geformt wird. Da der Führungsring 8 nicht längsgeteilt ist, weist der axial äußere Rand 20 der Mündung 19 keine Längsnähte auf. Dies ist für einen sicheren Verschluß des fertigen Hohlglasgegenstands vorteilhaft.

In allen Zeichnungsfiguren sind gleiche Teile mit gleichen Bezugszahlen versehen.

Der erfindungsgemäße Preßstempel 10 gemäß Fig. 2 ist auf seiner Länge nicht mehr in die Abschnitte 14, 15 gemäß Fig. 1 unterteilt, sondern auf seiner ganzen Länge durchgehend gleichmäßig konisch ausgebildet. Aus verfahrenstechnischen Gründen kann allerdings auch bei dem erfindungsgemäßen Preßstempel 10 eine sich entlang seiner Länge ändernde Konizität vorgesehen sein. In jedem Fall kann erfindungsgemäß die Konizität so groß gewählt werden, daß sich nach Fertigstellung des Külbels 18 der Preßstempel 10 ohne Beschädigung der Innenfläche des Külbels aus dem Külbel herausziehen läßt.

An den Fuß 22 des Preßstempels 10 schließt sich der breiter als der Preßstempel 10 ausgebildete Schaft 16 an. In einer ringförmigen Stirnfläche 23 des Schafts 16 ist, angrenzend an den Fuß 22, die ringförmige Ausnehmung 21 zur Formung des axial äußeren Randes 20 der Mündung 19 ausgebildet. Im übrigen liegt die ringförmige Stirnfläche 23 gemäß den Fig. 4, 5 und 9 zur Definition der Arbeitsendstellung des Preßstempels 10 an einer Anschlagfläche 24 des geschlossenen Mündungswerkzeugs 2 an. Die ringförmige Stirnfläche 23 geht radial außen in eine Fase 25 an dem zylindrischen Schaft 16 über.

Fig. 3 zeigt die Vorform 1 mit geschlossenen Mündungswerkzeughälften 3, 4 und ebenfalls geschlossenen Vorformhälften 5, 6. Der Preßstempel 10 befindet sich in einer axialen Zwischenstellung, der sogenannten Ladestellung, in der die Stempelspitze 13 das Mündungswerkzeug 2 durchdrungen hat und ein kurzes Stück in die Ausnehmung 17 der Vorformhälften 5, 6 eingedrungen ist. Im oberen Bereich der Vorformhälften 5, 6 ist eine Ladeöffnung 26 ausgebildet. Die Ladeöffnung 26 ist im wesentlichen trichterförmig mit konischen Wandabschnitten 27 und 28 ausgebildet. Zwischen den konischen Wandabschnitten 27, 28 befindet sich ein zylindrischer Aufnahmeabschnitt 29.

Koaxial mit einer Längsachse 30 der Vorform 1 ist oberhalb der Ladeöffnung 26 ein Tropfenauslaß 31 eines Speisers 32 angeordnet, in dem sich schmelzflüssiges Glas 33 befindet. In dem Glas 33 ist, koaxial mit dem Tropfenauslaß 31, ein Plunger 34 angeordnet, der in den Richtungen des Doppelpfeils 35 in an sich bekannter Weise durch einen Antrieb 36 heb- und senkbar ist. Der Antrieb 36 wird über eine Leitung 37 so gesteuert, daß das schmelzflüssige Glas 33 aus dem Tropfenauslaß 31 so austritt, daß sich letztlich Posten 38 schmelzflüssigen Glases von möglichst konstanter Masse ergeben. Aus dem Tropfenauslaß 31 tritt in an sich bekannter Weise ein Strang des schmelzflüssigen Glases 33 in Abhängigkeit von der Vertikalbewegung des Plungers 34 aus. Von diesem Glasstrang werden nacheinander durch einen Scherenmechanismus 39, der in den Richtungen des Doppelpfeils 40 bewegbar ist, die Posten 38 abgetrennt. Die Posten 38 fallen entweder unmittelbar in die Ladeöffnung 26 oder werden durch ein an sich bekanntes, zur Vereinfachung nicht dargestelltes Rinnensystem in die Ladeöffnung 26 eingebracht.

In Fig. 3 ist ein solcher Posten 38 durch die Ladeöffnung 26 hindurch in die Ausnehmung 17 eingebracht worden und auf die Stempelspitze 13 gefallen. Dabei ist die Stempelspitze 13 etwas in den Posten 38 eingedrungen, jedoch nicht so weit, daß Glasmasse in den Bereich der Mündungswerkzeughälften 3, 4 gelangt wäre.

In der Haltenut 7 des Mündungswerkzeugs 2 ist in Fig. 3 der radial äußere Teil eines nicht längsgeteilten Zentrierrings 41 gehalten. Der Zentrierring 41 weist einen zylindrischen mittigen Durchlaß 42 auf, der unten in eine Erweiterung 43 des Zentrierrings 41 übergeht.

In Fig. 4 ist ein späterer Verfahrenszustand als in Fig. 3 dargestellt. Zunächst wurde in die Ladeöffnung 26 gemäß Fig. 1 von oben her ein Preßelement 44 mit einer Führungshülse 45 eingesetzt. Die Führungshülse 45 weist unten und radial außen eine Fase 46 auf, die die Einführung der Ladehülse 45 in den konischen Wandabschnitt 27 und den zylindrischen Aufnahmeabschnitt 29 erleichtert. Die Führungshülse 45 ist schließlich in der in Fig. 4 gezeichneten Weise mit einer Schiebepassung in dem Aufnahmeabschnitt 29 angeordnet und findet ihren unteren axialen Anschlag an einer ringförmigen Anschlagfläche 47 der Vorformhälften 5, 6. Diese Anschlagstellung wird durch einen nicht gezeichneten, die Baugruppe 44, 45, 48 bewegenden Mechanismus bis zur späteren Entformung des fertigen Külbels aufrechterhalten. Das Preßelement 44 ist als Kolbenstange einer in diesem Fall pneumatischen Kolben-Zylinder-Einheit 48 ausgebildet. Ein an dem Preßelement 44 befestigter Kolben 49 der Einheit 48 ist in einem Zylinder 50 der Einheit 48 verschiebbar. Der Zylinder 50 ist an der Führungshülse 45, zum Beispiel durch eine Schweißnaht 51, befestigt. Ein erster Zylinderraum 52 ist mit einer Leitung 53 und ein zweiter Zylinderraum 54 mit einer Leitung 55 verbunden.

Mit dem Kolben 49 ist ein Fühler 56 eines Weggebers 57 verbunden. Der Weggeber 57 ist an dem Zylinder 50 befestigt. Der Fühler 56 ist durch eine abgedichtete Durchbrechung 58 des Zylinders 50 verschiebbar hindurchgeführt. Der Fühler 56 ist außerdem mit einem Schleifer 59 eines Potentiometers 60 des Weggebers 57 verbunden. Eine Ausgangsleitung 61 des Weggebers 57 ist mit einer elektrischen Steuerung 62 verbunden, von deren Ausgang die Leitung 37 (vgl. Fig. 3) abgeht.

Zwischen dem Kolben 49 und einer äußeren Wand 63 des Zylinders 50 ist eine Druckfeder 64 angeordnet, die den Kolben 49 und das Preßelement 44 in Fig. 4 nach unten hin vorspannt. Dazu ist an die Leitung 55 ein 3Wege/2Stellungsventil 65 gemäß Fig. 7 angeschlossen. Die Leitung 53 mündet in die Atmosphäre.

Wenn nun die aus Preßelement 44, Führungshülse 45 und Kolben-Zylinder-Einheit 48 bestehende Baugruppe in die Ladeöffnung 26 gemäß Fig. 3 von oben her eingesetzt wird, taucht das Preßelement 44 aufgrund der Druckwirkung der Druckfeder 64 und seines Eigengewichts tiefstmöglich in die Ausnehmung 17 ein. Sodann wird der Preßstempel 10 aus seiner in Fig. 3 gezeichneten Ladestellung nach oben bewegt. Dabei fädelt sich die Fase 25 des zylindrischen Schafts 16 in die Erweiterung 43 des Zentrierrings 41 ein und zentriert dabei den Preßstempel 10 relativ zu der Mündungsform 1. Von da ab findet eine strenge radiale Führung des Schafts 16 in dem mittigen Durchlaß 42 des Zentrierrings 41 statt. Entsprechend genau ist die Zentrierung des Preßstempels 10 relativ zu der Vorform 1. Die Aufwärtsbewegung des Preßstempels 10 setzt sich fort, bis die ringförmige Stirnfläche 23 des Schafts 16 zur Anlage an der Anschlagfläche 24 des Mündungswerkzeugs 2 gelangt. Bis dahin dringt der Preßstempel 10 zunehmend in den Posten 38 ein und schiebt einen Boden 66 des Postens 38 in Berührung mit einer dem Posten 38 zugewandten Fläche 67 des Preßelements 44. Zu dieser Zeit ist gemäß Fig. 7 der zweite Zylinderraum 54 über die Leitung 55 entlüftet. Der Glasposten 38 kann deshalb gegen die Kraft der Druckfeder 64 und das Eigengewicht von Preßelement 44 und Kolben 49 diese letzteren ohne großen Widerstand nach oben verschieben, bis gemäß Fig. 4 die ringförmige Stirnfläche 23 an der Anschlagfläche 24 anliegt. Von diesem Augenblick an ist der Preßstempel 10 nur noch ein passives Formungselement. Der Preßstempel 10 hat zu diesem Zeitpunkt seine stets gleiche, definierte Stellung relativ zu dem Mündungswerkzeug 2 und den Vorformhälften 5, 6 eingenommen. Entsprechend konstant erfolgt die Formung der Mündung 19 (Fig. 1) des Külbels 18.

In dem in Fig. 4 gezeigten Verfahrenszustand ist der Mündungsraum in dem Mündungswerkzeug 2 und in der ringförmigen Ausnehmung 21 noch nicht mit schmelzflüssigen Glas gefüllt. Dies erfolgt erst in dem nächsten Verfahrensschritt, dessen Ende in Fig. 5 dargestellt ist.

In Fig. 5 befindet sich der Preßstempel 10 weiterhin in seiner obersten Arbeitsendstellung, in welcher die ringförmige Stirnfläche 23 an der Anschlagfläche 24 anliegt. Durch Umschaltung des Wegeventils 65 in Fig. 7 in seine untere Schaltstellung wurde die Leitung 55 und damit der zweite Zylinderraum 54 mit einer pneumatischen Druckleitung 69 verbunden. Dies führte dazu, daß der Kolben 49 und das Preßelement 44 aus der in Fig. 4 gezeigten Stellung in die in Fig. 5 gezeichnete Tiefststellung verschoben wurden. Dabei wurde das Külbel 18 auch im Bereich seiner Mündung 19 fertiggepreßt. Dabei ist der Schleifer 59 ebenfalls in seine Tiefststellung relativ zu dem Potentiometer 60 gelangt. Diese Stempelstellungsinformation gelangt über die Ausgangsleitung 61 in die elektrische Steuerung 62, die gegebenenfalls über den Hub des Plungers 34 eine Anpassung der Masse des Postens 38 bewirkt.

Da das Külbel 18 jetzt fertiggepreßt ist, kann es entformt werden. Dazu wird zunächst das Wegeventil 65 in seine in Fig. 7 gezeichnete obere Schaltstellung geschaltet und der zweite Zylinderraum 54 entlüftet. Sodann wird der Preßstempel 10 aus seiner in Fig. 5 gezeigten Arbeitsendstellung in seine in Fig. 6 gezeichnete tiefste Übergabeendstellung zurückgezogen. Danach wird die Baugruppe aus Preßelement 44, Führungshülse 45 und Kolben-Zylinder-Einheit 48 entfernt. Schließlich werden die Vorformhälften 5, 6 in an sich bekannter Weise geöffnet.

Der Preßstempel 10 befindet sich jetzt völlig außerhalb des Külbels 18 und ist so weit abgesenkt, daß das Mündungswerkzeug 2 mit dem Zentrierring 41 und dem Külbel 18 in eine nicht weiter gezeichnete, an sich bekannte Fertigformstation der Preß-Blas-Glasformmaschine übergeben werden kann. Dies geschieht in der Regel bei I.S.-Glasformmaschinen durch einen sogenannten Invertmechanismus, der das Mündungswerkzeug 2 und das Külbel 18 um 180 ° um eine waagerechte Achse in die Fertigformstation schwenkt, wo das Külbel 18 dann mit der Mündung 19 nach oben angeordnet ist.

Die Ansteuerung der Leitungen 53, 55 des Zylinders 50 kann auch auf andere Weise geschehen. Dazu werden die Leitungen 53, 55 in der in Fig. 8 gezeichneten Weise mit einem 4Wege/2Stellungsventil 71 verbunden. In der in Fig. 8 gezeichneten oberen Schaltstellung des Wegeventils 71 ist der erste Zylinderraum 52 mit Druckluft beaufschlagt. Dies führt dazu, daß der Kolben 49 mit dem Preßelement 44 bis in seine oberste Endstellung verschoben wird. Eine Druckfeder entsprechend der Druckfeder 64 in den Fig. 4 und 5 ist in diesem Fall nicht erforderlich. Vielmehr ist der Zylinder 50 doppeltwirkend ausgebildet und angeschlossen. Das Preßelement 44 und der Kolben 49 verharren in dieser obersten Stellung auch dann, wenn die Baugruppe 44, 45, 48 auf die inzwischen mit dem Posten 38 gefüllte Vorform 1 aufgesetzt wird. Diese oberste Stellung des Preßelements 44 und des Kolbens 49 kann beibehalten werden, bis der Preßstempel 10 seine oberste Arbeitsendstellung gemäß den Fig. 4 und 5 erreicht hat. Bis dahin steht die Fläche 67 des Preßelements 44 normalerweise nicht in Berührung mit dem Boden 66 des Postens 38. Erst wenn der Preßstempel seine oberste Arbeitsendstellung gemäß Fig. 4 erreicht hat, wird das Wegeventil 71 in Fig. nach unten hin durchgeschaltet. Dadurch wird der erste Zylinderraum 52 entlüftet und der zweite Zylinderraum 54 mit Druckluft beaufschlagt. Folglich bewegt sich der Kolben 49 mit dem Preßelement 44 nach unten und preßt das Külbel 18 in der gleichen Weise fertig, wie dies im Zusammenhang mit Fig. 5 beschrieben wurde. Es erfolgt sodann das Ausformen bis zu dem in Fig. 6 gezeichneten Zustand in der gleichen Weise wie zuvor beschrieben.

Fig. 9 entspricht insoweit der Fig. 5, als in Fig. 9 ebenfalls das Külbel 18 in der noch geschlossenen Vorform 1 fertiggepreßt worden ist. Es handelt sich hierbei um ein Külbel 18, aus dem später in der Fertigformstation ein sogenanntes Weithalsglas mit verhältnismäßig großem Mündungsdurchmesser hergestellt wird. Anstelle der längsgeteilten Vorformhälften 5, 6 in vorangegangenen Figuren wird in Fig. 9 eine nicht längsgeteilte Blockform 72 verwendet. Die Blockform 72 ist in den Richtungen des Doppelpfeils 73 heb- und senkbar durch einen nicht näher gezeichneten, an sich bekannten Hubmechanismus. Zum Schließen der Vorform 1 gemäß Fig. 9 wird zunächst das Mündungswerkzeug 2 geschlossen. Sodann wird die Blockform 72 angehoben, bis sich eine radiale Ringfläche 75 der Blockform an eine entsprechende Ringfläche 76 des Mündungswerkzeugs 2 angelegt hat. Gleichzeitig hat sich ein konischer Zuhaltering 74 an eine entsprechende konische Gegenfläche des Mündungswerkzeugs 2 angelegt. Der Zuhaltering 74 verhindert, daß sich das geschlossene Mündungswerkzeug 2 während des Preßvorgangs in unerwünschter Weise öffnet. Das Preßelement 44 ist in einer Bodenöffnung 77 der Blockform 72 analog Fig. 7 oder 8 verschiebbar. Der Zylinder 50 ist in diesem Fall, z.B. durch eine Schweißnaht oder Schrauben, an dem Boden der Blockform 72 befestigt.

Auch gemäß Fig. 9 läuft der Preßvorgang zweistufig ab, nämlich mit einem Vorpressen gemäß Fig. 4 und einem Fertigpressen gemäß Fig. 5.

Altemativ zu Fig. 9 könnte die Blockform 72 auch mit der Ausnehmung 17 nach unten angeordnet sein. Dann wird der Posten durch die Bodenöffnung 77 eingebracht. Die Bodenöffnung 77 kann zu diesem Zweck entsprechend der trichterförmigen Ladeöffnung 26 in Fig. 3 ausgebildet sein. Zum Laden müßten die Kolben-Zylinder-Einheit 48, das Preßelement 44 und der Weggeber 57 in ähnlicher Weise von der Blockform 72 entfernt werden, wie in Fig. 3 von den geschlossenen Vorformhälften 5, 6.

## Patentansprüche

1. Verfahren zur Herstellung eines Külbels (18) durch Pressen in einer Vorform (1) einer Preß-Blas-Glasformmaschine, mit folgenden Schritten:
(a) Aus einem Speiser (32) wird ein Posten (38) schmelzflüssigen Glases von oben durch eine Ladeöffnung (26) hindurch in eine Ausnehmung (17) der Vorform (1) eingebracht, während die Vorform (1) eine Mündungsform mit einem geschlossenen, längsgeteilten, eine Mündung (19) des Külbels (18) formenden Mündungswerkzeug (2) aufweist,
(b) ein Preßstempel (10) wird durch einen mittigen Durchlaß (42) der Mündungsform hindurch in den Posten (38) hineingepreßt, bis er in einer Arbeitsendstellung (Fig.4;9) an der Mündungsform anliegt, wobei das Külbel (18) bis zu einer teilweisen Füllung der Ausnehmung (17) mit schmelzflüssigem Glas vorgepreßt wird,
(c) gleichzeitig mit oder im Anschluß an Schritt (b) wird mit einem einen Teil der Ausnehmung (17) begrenzenden Preßelement (44) Druck auf einen Boden (66) des gemäß Schritt (b) vorgepreßten Külbels (18) ausgeübt, bis die Ausnehmung (17) vollständig mit schmelzflüssigem Glas gefüllt und das Külbel (18) fertiggepreßt ist, und
(d) wenn in der Arbeitsendstellung (Fig. 4;9) des Preßstempels (10) die Ausnehmung (17) vollständig mit schmelzflüssigem Glas gefüllt und das Külbel (18) geformt ist, werden einerseits das Preßelement (44) und alle Bestandteile der Vorform (1) mit Ausnahme des weiterhin geschlossenen Mündungswerkzeugs (2) so weit entfernt, daß das weiterhin geschlossene Mündungswerkzeug (2) mit dem durch das Mündungswerkzeug (2) an der Mündung (19) gehaltenen Külbel (18) in eine Fertigformstation der Glasformmaschine übergeben werden kann, und wird andererseits der Preßstempel (10) aus dem Külbel (18) heraus in eine Übergabeendstellung (Fig. 6) zurückbewegt,
**gekennzeichnet durch** folgende Schritte:
(A) im Schritt (b) wird der Preßstempel (10) in seine Arbeitsendstellung (Fig. 4;9) bis zur Anlage (24) an dem Mündungswerkzeug (2) bewegt, und
(B) ein axial äußerer Dichtungsrand (20) der Mündung (19) des Külbels (18) wird vollständig **durch** den Preßstempel (10) geformt.

2. Verfahren nach Anspruch 1,
**dadurch gekennzeichnet, daß** das Glas schon im Schritt (A) in Berührung mit dem Preßelement (44) tritt,
und daß das Preßelement (44) durch das Glas aus der Ausnehmung (17) herausbewegt wird.

3. Verfahren nach Anspruch 1 oder 2,
**dadurch gekennzeichnet, daß** die Vorform (1) längsgeteilte Vorformhälften (5,6) aufweist,
daß der Posten (38) durch die in einem Boden der geschlossenen Vorformhälften (5,6) ausgebildete Ladeöffnung (26) hindurch eingebracht wird,
und daß die Ladeöffnung (26) nach dem Laden durch das Preßelement (44) geschlossen wird.

4. Verfahren nach einem der Ansprüche 1 bis 3,
**dadurch gekennzeichnet, daß** die im Schritt (B) sich ergebende maximale Eindringtiefe des Preßelements (44) in die Ausnehmung (17) durch eine Wegmessung (57) des Preßelements (44) relativ zu der Vorform (1) festgestellt wird,
und daß die Wegmessung (57) zur Steuerung und/oder Regelung der Masse der den Speiser (32) verlassenden Posten (38) verwendet wird.

5. Vorrichtung zur Herstellung eines Külbels (18) durch Pressen in einer Vorform (1) einer Preß-Blas-Glasformmaschine,
wobei aus einem Speiser (32) ein Posten (38) schmelzflüssigen Glases von oben durch eine Ladeöffnung (26) hindurch in eine Ausnehmung (17) der Vorform (1) einbringbar ist, während die Vorform (1) eine Mündungsform mit einem geschlossenen, längsgeteilten, eine Mündung (19) des Külbels (18) formenden Mündungswerkzeug (2) aufweist, welches Mündungswerkzeug geöffnet und wieder geschlossen werden kann,
mit einem durch einen mittigen Durchlaß (42) der Mündungsform hindurch bis in eine Arbeitsendstellung (Fig. 4;9) in Anlage an der Mündungsform zum Vorpressen des Külbels (18) in den Posten (38) preßbaren und nach Formung des Külbels (18) aus dem Külbel (18) herausziehbaren Preßstempel (10),
und mit einem einen Teil der Ausnehmung (17) begrenzenden, relativ zu der Vorform (1) bewegbaren Preßelement (44),
wobei mit dem Preßelement (44) Druck auf einen Boden (66) des vorgepreßten Külbels (18) ausübbar ist, bis die Ausnehmung (17) vollständig mit schmelzflüssigem Glas gefüllt und das Külbel (18) fertiggepreßt ist,
**dadurch gekennzeichnet, daß** der Preßstempel (10) in seiner Arbeitsendstellung (Fig. 4;9) an dem Mündungswerkzeug (2) anliegt (24),
und daß der Preßstempel so geformt ist, daß ein axial äußerer Dichtungsrand (20) der Mündung (19) des Külbels (18) vollständig durch den Preßstempel (10) formbar ist.

6. Vorrichtung nach Anspruch 5,
**dadurch gekennzeichnet, daß** die Vorform (1) längsgeteilte Vorformhälften (5,6) aufweist,
daß die Ladeöffnung (26) in einem Boden der geschlossenen Vorformhälften (5,6) ausgebildet ist,
und daß die Ladeöffnung (26) nach dem Laden durch das Preßelement (44) schließbar ist.

7. Vorrichtung nach Anspruch 5,
**dadurch gekennzeichnet, daß** die Vorform (1) eine nicht längsgeteilte Blockform (72) aufweist,
daß das Preßelement (44) in einer unteren Bodenöffnung (77) der Blockform (72) verschiebbar gelagert ist,
daß sich an die Ladeöffnung (26) der Blockform (72) nach oben hin das geschlossene Mündungswerkzeug (2) anschließt,
und daß an dem geschlossenen Mündungswerkzeug (2) radial außen ein Zuhaltering (74) der Blockform (72) anliegt.

8. Vorrichtung nach einem der Ansprüche 5 bis 7,
**dadurch gekennzeichnet, daß** sich an einen Fuß (22) des Preßstempels (10) ein breiter als der Preßstempel (10) ausgebildeter Schaft (16) anschließt,
und daß in einer ringförmigen Stirnfläche (23) des Schafts (16), angrenzend an den Fuß (22), eine ringförmige Ausnehmung (21) zur Formung des vollständigen axial äußeren Dichtungsrandes (20) der Mündung (19) des Külbels (18) ausgebildet ist.

9. Vorrichtung nach Anspruch 8,
**dadurch gekennzeichnet, daß** die Stirnfläche (23) zur Definition der Arbeitsendstellung (Fig. 4;9) des Preßstempels (10) an einer Anschlagfläche (24) des geschlossenen Mündungswerkzeugs (2) anliegt.

10. Vorrichtung nach einem der Ansprüche 5 bis 9,
**dadurch gekennzeichnet, daß** sich an einen Fuß (22) des Preßstempels (10) ein zylindrischer Schaft (16) anschließt,
und daß der Schaft (16) auf einem letzten Teil des Weges des Preßstempels (10) bis in seine Arbeitsendstellung (Fig. 4;9) in einen relativ zu der Vorform (1) festen Zentrierring (41) eintaucht und durch den Zentrierring (41) in radialer Richtung zentriert und geführt ist.

11. Vorrichtung nach Anspruch 10,
**dadurch gekennzeichnet, daß** der Zentrierring (41) nicht längsgeteilt ist, und daß der Zentrierring (41) radial außen in einer Haltenut (7) des Mündungswerkzeugs (2) gehalten ist.

## Claims

1. Method for producing a parison (18) by means of a pressing process in a parison mould (1) of a press-blow glass forming machine, comprising the following steps:
(a) a gob (38) of molten glass is introduced from a feed device (32) from the top through a loading orifice (26) into a cavity (17) of the parison mould (1), while the parison mould (1) comprises a neck mould having a closed, longitudinally-divided neck tool (2) which forms a neck (19) of the parison (18),
(b) a press ram (10) is pressed into the glass gob (38) through a middle through passage (42) of the neck mould until said press ram lies in an end operating position (Figure 4;9) against the neck mould, wherein the parison (18) is preliminarily pressed until the cavity (17) is partially filled with molten glass,
(c) simultaneously with or following Step (b) pressure is exerted using a pressing element (44), which defines a part of the cavity (17), on a base (66) of the parison (18) which has been preliminarily pressed according to Step (b), until the cavity (17) is completely filled with molten glass and the parison (18) is finish-pressed, and
(d) when the press ram (10) is in the end operating position (Figure 4; 9), the cavity (17) is completely filled with molten glass and the parison (18) has been formed, on the one hand the pressing element (44) and all the components of the parison mould (1) with the exception of the still closed neck tool (2) are removed to the extent that the still closed neck tool (2) can be transferred with the parison (18) held by the neck tool (2) at the neck (19) into a finish-forming station of the glass forming machine and on the other hand the press ram (10) is moved back out of the parison (18) into an end discharge position (Figure 6),
**characterised by** the following steps:
(A) in Step (b) the press ram (10) is moved into its end operating position (Figure 4;9) as far as the stop surface (24) on the neck tool (2), and
(B) an axially outer sealing edge (20) of the neck (19) of the parison (18) is completely formed by the press ram (10).

2. Method as claimed in claim 1, **characterised in**
**that** the glass comes into contact with the pressing element (44) in Step (A), and
**that** the pressing element (44) is moved by the glass out of the cavity (17).

3. Method as claimed in claim 1 or 2, **characterised in**
**that** the parison mould (1) comprises longitudinally-divided parison mould halves (5,6),
**that** the glass gob (38) is introduced through the loading orifice (26) formed in a base of the closed parison mould halves (5,6), and
**that** the loading orifice (26) is closed after loading by means of the pressing element (44).

4. Method as claimed in any one of claims 1 to 3, **characterised in**
**that** the maximum penetration depth of the pressing element (44) into the cavity (17) occurring in Step (B) is fixed relative to the parison mould (1) by means of a displacement sensor (57) of the pressing element (44), and
**that** the displacement sensor (57) is used for controlling and/or regulating the mass of the glass gobs (38) leaving the feed device (32).

5. Apparatus for producing a parison (18) by means of a pressing process in a parison mould (1) of a press-blow glass forming machine,
wherein a gob (38) of molten glass can be introduced from a feed device (32) from the top through a loading orifice (26) into a cavity (17) of the parison mould (1), while the parison mould (1) comprises a neck mould with a closed, longitudinally-divided neck tool (2) which forms a neck (19) of the parison (18), which neck tool can be opened and closed,
with a press ram (10) which can be pressed into the glass gob (38) through a middle through-passage (42) of the neck mould as far as an end operating position (Figure 4;9) in position against the neck mould for the purpose of the preliminary pressing of the parison (18) and which press ram can be removed from the parison (18) after the parison (18) has been formed,
and with a pressing element (44) which can move relative to the parison mould (1) and defines a part of the cavity (17),
wherein using the pressing element (44) it is possible to exert pressure on a base (66) of the preliminarily pressed parison (18) until the cavity (17) is completely filled with molten glass and the parison (18) is finish-pressed,
**characterised in that** the press ram (10) lies (24) in its end operating position (Figure 4;9) against the neck tool (2),
and that the press ram is formed such that an axially outer sealing edge (20) of the neck (19) of the parison (18) can be completely formed by the press ram (10).

6. Apparatus as claimed in claim 5,
**characterised in that** the parison mould (1) comprises longitudinally-divided parison mould halves (5,6),
that the loading orifice (26) is formed in a base of the closed parison mould halves (5,6),
and that the loading orifice (26) can be closed after loading by means of the pressing element (44).

7. Apparatus as claimed in claim 5,
**characterised in that** the parison mould (1) comprises a block mould (72) which is not longitudinally-divided,
that the pressing element (44) is displaceably mounted in a lower base orifice (77) of the block mould (72),
that the closed neck tool (2) is adjacent in the upwards direction to the loading orifice (26) of the block mould (72),
and that a locking ring (74) of the block mould (72) lies adjacent in a radially outwards direction to the closed neck tool (2).

8. Apparatus as claimed in any one of the claims 5 to 7,
**characterised in that** a shaft (16), which is wider than the press ram (10), is adjacent to a foot (22) of the press ram (10),
and that an annular cavity (21) for the purpose of forming the complete axially outer sealing edge (20) of the neck (19) of the parison (18) is formed in an annular end face (23) of the shaft (16) adjacent to the foot (22).

9. Apparatus as claimed in claim 8,
**characterised in that** the end face (23) for the purpose of defining the end operating position (Figure 4;9) of the press ram (10) lies against a stop surface (24) of the closed neck tool (2).

10. Apparatus as claimed in any one of claims 5 to 9,
**characterised in that** a cylindrical shaft (16) is adjacent to a foot (22) of the press ram (10),
and that the shaft (16) is received on a last part of the path of the press ram (10) as far as its end operating position (Figure 4;9) in a centring ring (41) which is fixed relative to the parison mould (1) and is guided and centred in the radial direction through the centring ring (41).

11. Apparatus as claimed in claim 10,
**characterised in that** the centring ring (41) is not longitudinally divided and that the centring ring (41) is held radially outwards in a holding groove (7) of the neck tool (2).

## Revendications

1. Procédé pour la fabrication d'une ébauche (18) par pressage dans un moule ébaucheur (1) d'une machine à mouler et souffler le verre, comprenant les étapes suivantes :
(a) une paraison (38) de verre en fusion est amenée à partir d'un dispositif d'alimentation (32) par le haut à travers une ouverture de chargement (26) vers une cavité (17) du moule ébaucheur (1), tandis que le moule ébaucheur (1) présente un moule d'embouchure avec un outil d'embouchure (2) fermé, divisé longitudinalement, qui forme une embouchure (19) dans l'ébauche (18) ;
(b) un piston de pressage (10) est enfoncé dans la paraison (38) à travers un passage central (42) du moule d'embouchure jusqu'à ce qu'il repose dans une position de fin de course de travail (Figure 4 ; 9) sur le moule d'embouchure, l'ébauche (18) étant pressée une première fois jusqu'à ce que la cavité (17) soit partiellement remplie de verre en fusion ;
(c) en même temps que l'étape (b) ou après celle-ci, une pression est exercée sur un fond (66) de l'ébauche (18) pressée une première fois selon l'étape (b) par un élément de pressage (44) délimitant une partie de la cavité (17), jusqu'à ce que la cavité (17) soit entièrement remplie de verre en fusion, et que le pressage de l'ébauche (18) soit terminé, et
(d) lorsque, dans la position de fin de course de travail (Figure 4 ; 9) du piston de pressage (10), la cavité (17) est entièrement remplie de verre en fusion et l'ébauche (18) est formée, l'élément de pressage (44) et tous les composants du moule ébaucheur (1), à l'exception de l'outil d'embouchure (2) qui reste fermé, sont d'une part éloignés suffisamment pour que l'outil d'embouchure (2) qui reste fermé puisse être transféré avec l'ébauche (18) retenue à l'embouchure (19) par l'outil d'embouchure (2) vers une station de moulage final de la machine à mouler le verre, et d'autre part le piston de pressage (10) est retiré de l'ébauche (18) et ramené dans la position de fin de course de transfert (Figure 6),
**caractérisé par** les étapes suivantes :
(A) dans l'étape (b), le piston de pressage (10) est déplacé dans sa position de fin de course de travail (Figure 4 ; 9) jusqu'à s'appuyer (24) sur l'outil d'embouchure (2), et
(B) un bord d'étanchéité (20) de l'embouchure (19) de l'ébauche (18), extérieur dans le sens axial, est entièrement formé par le piston de pressage (10).

2. Procédé selon la revendication 1, **caractérisé en ce que** le verre entre en contact avec l'élément de pressage (44) dès l'étape (A), et **en ce que** l'élément de pressage (44) est retiré de la cavité (17) à travers le verre.

3. Procédé selon la revendication 1 ou 2, **caractérisé en ce que** le moule ébaucheur (1) présente des moitiés de moule ébaucheur (5, 6) divisées longitudinalement, **en ce que** la paraison (38) est introduite à travers l'ouverture de chargement (26) ménagée dans un fond des moitiés de moule ébaucheur (5, 6) fermées, et **en ce que** l'ouverture de chargement (26) est fermée par l'élément de pressage (44) après le chargement.

4. Procédé selon l'une des revendications 1 à 3, **caractérisé en ce que** la profondeur maximale de pénétration de l'élément de pressage (44) dans la cavité (17) dans l'étape (B) est déterminée par une mesure de la course (57) de l'élément de pressage (44) par rapport au moule ébaucheur (1), et **en ce que** la mesure de la course (57) est utilisée pour commander et/ou réguler la masse de la paraison (38) sortant du dispositif d'alimentation (32).

5. Dispositif pour la fabrication d'une ébauche (18) par pressage dans un moule ébaucheur (1) d'une machine à mouler et souffler le verre,
dans lequel une paraison (38) de verre en fusion peut être amenée à partir d'un dispositif d'alimentation (32) par le haut à travers une ouverture de chargement (26) vers une cavité (17) du moule ébaucheur (1), tandis que le moule ébaucheur (1) présente un moule d'embouchure avec un outil d'embouchure (2) fermé, divisé longitudinalement, qui forme une embouchure (19) dans l'ébauche (18), lequel outil d'embouchure peut être ouvert et refermé,
avec un piston de pressage (10) pouvant être enfoncé dans la paraison (38) à travers un passage central (42) du moule d'embouchure jusqu'à ce qu'il repose dans une position de fin de course de travail (Figure 4 ; 9) sur le moule d'embouchure pour un premier pressage de l'ébauche (18) et peut être retiré de l'ébauche (18) après le formage de l'ébauche (18),
et avec un élément de pressage (44) délimitant une partie de la cavité (17) et mobile par rapport au moule ébaucheur (1),
dans lequel l'élément de pressage (44) peut exercer une pression sur un fond (66) de l'ébauche (18) pressée une première fois jusqu'à ce que la cavité (17) soit complètement remplie de verre en fusion et que le pressage de l'ébauche (18) soit terminé,
**caractérisé en ce que** le piston de pressage (10) repose (24) sur l'outil d'embouchure (2) dans sa position de fin de course de travail (Figure 4 ; 9) et **en ce que** le piston de pressage est conformé de telle sorte qu'un bord d'étanchéité (20) de l'embouchure (19) de l'ébauche (18), extérieur dans le sens axial, puisse être complètement formé par le piston de pressage (10).

6. Dispositif selon la revendication 5, **caractérisé en ce que** le moule ébaucheur (1) présente des moitiés de moule ébaucheur (5, 6) divisées longitudinalement, **en ce que** l'ouverture de chargement (26) est formée dans un fond des moitiés de moule ébaucheur (5, 6) fermées et **en ce que** l'ouverture de chargement (26) peut être fermée par l'élément de pressage (44) après le chargement.

7. Dispositif selon la revendication 5, **caractérisé en ce que** le moule ébaucheur (1) présente un moule-bloc (72) non divisé longitudinalement, **en ce que** l'élément de pressage (44) est supporté de manière coulissante dans une ouverture de fond inférieure (77) du moule-bloc (72), **en ce que** l'ouverture de chargement (26) du moule-bloc (72) est reliée vers le haut à l'outil d'embouchure (2) fermé, et **en ce qu'**un anneau de maintien de la position fermée (74) du moule-bloc (72) repose à l'extérieur dans le sens radial sur l'outil d'embouchure (2) fermé.

8. Dispositif selon l'une des revendications 5 à 7, **caractérisé en ce qu'**un pied (22) du piston de pressage (10) est raccordé à une tige (16) plus large que le piston de pressage (10), et **en ce qu'**il est prévu dans une face (23) annulaire de la tige (16) contiguë au pied (22), un évidement annulaire (21) destiné à former le bord d'étanchéité (20) complet, extérieur dans le sens axial, de l'embouchure (19) de l'ébauche (18).

9. Dispositif selon la revendication 8, **caractérisé en ce que** la face (23) repose, pour définir la position de fin de course de travail (Figure 4 ; 9) du piston de pressage (10), sur une face de butée (24) de l'outil d'embouchure (2) fermé.

10. Dispositif selon l'une des revendications 5 à 9, **caractérisé en ce qu'**un pied (22) du piston de pressage (10) est raccordé à une tige (16) cylindrique, et **en ce que** la tige (16) pénètre sur une dernière partie du trajet du piston de pressage (10) jusqu'à sa position de fin de course de travail (Figure 4 ; 9) dans un anneau de centrage (41), fixe par rapport au moule ébaucheur (1), et est centrée dans le sens radial et guidée par l'anneau de centrage (41).

11. Dispositif selon la revendication 10, **caractérisé en ce que** l'anneau de centrage (41) n'est pas divisé longitudinalement et **en ce que** l'anneau de centrage (41) est retenu à l'extérieur dans le sens radial dans une gorge de maintien (7) de l'outil d'embouchure (2).
